# EUROPEAN PATENT SPECIFICATION

(11) **EP 2 796 110 B1**
(45) Date of publication and mention of the grant of the patent: **07.06.2017**
(21) Application number: 13164843.8
(22) Date of filing: 23.04.2013
(51) Int. Cl.: A61C 13/083, G09B 23/28

(54) **Artificial tooth suitable as a caries model**
Als Karies-Modell geeigneter künstlicher Zahn
Dent artificielle pour modèle de caries

(43) Date of publication of application: 29.10.2014
(73) Proprietor: Credentis AG, 5210 Windisch (CH)
(72) Inventor: Wüthrich, Alain, 3400 Burgdorf (CH); Pieles, Uwe, 79379 Müllheim (DE); Hug, Michael, 4800 Zofingen (CH); Stevanovic, Sabrina, 5032 Aarau Rohr (CH); Lysek, Dominikus Amadeus, 5210 Windisch (CH)
(74) Representative: Moré, Solveig Helga

(56) References cited:
- WO-A1-97/34278
- JP-A- H05 241 500
- LIM B S ET AL: "Quantitative analysis of adhesion of cariogenic streptococci to orthodontic raw materials", AMERICAN JOURNAL OF ORTHODONTICS AND DENTOFACIAL ORTHOPEDICS, MOSBY, ST. LOUIS, MO, US, vol. 133, no. 6, 1 June 2008 (2008-06-01), pages 882-888, XP022690107, ISSN: 0889-5406, DOI: 10.1016/J.AJODO.2006.07.027 [retrieved on 2008-06-04]

## Description

The present invention relates to an artificial tooth which is suitable as a caries model. The tooth comprises bonded artificial enamel and artificial dentin, which both comprise pressed calcium phosphate, and are similar in their characteristics to natural human enamel and dentin, respectively. The calcium phosphate preferably is hydroxyapatite. The artificial enamel is sintered after pressing. The invention also relates to use of said artificial tooth for inducing a caries lesion or for experimental prevention and/or treatment of a caries lesion, e.g., by remineralisation. The tooth may also be used for treatment or prevention of a tooth disease such as a caries lesion, preferably by drilling, remineralisation, varnishing and/or filling a lesion. This can be done, e.g., for practice, educational or scientific purposes. Methods of generating, preventing and/or treating a caries lesion in the artificial tooth are also subject matter of the invention.

Dental caries is usually caused by a bacterial infection that causes demineralization and destruction of the hard tissues of the tooth (enamel, dentin and cementum), typically by production of acid by bacterial fermentation of the food debris accumulated on the tooth surface. If demineralization exceeds saliva capacitiy and other remineralisation factors, these hard tissues progressively break down, producing dental caries. The bacteria most responsible for dental caries are *Streptococcus mutans, Streptococcus sobrinus,* and *lactobacilli.* If left untreated, the disease can lead to pain, tooth loss and infection (wikipedia.org).

According to WHO estimations, about 100 million caries treatments per year are carried out in the western part of the world. With an infection rate of 95% for youths and adults, caries is the most common disease throughout the world, and probably one of the most infectious bacterial diseases. While infection numbers are slowly declining over the last years due to better oral hygiene, use of fluoridated dentifrices, better prevention measures and, in some countries, use of fluoridated drinking water, the rates are still very high, and the economic costs enormous. Thus, optimised measures for prevention and treatment of caries are urgently needed.

In the past, basic research regarding induction of caries and prevention of the same was often carried out with extracted human teeth (e.g., Fontana et al., 2000). However, such extracted teeth vary widely with regard to their characteristics and do not allow for standardisation, e.g., for exact comparisons between different experimental setups. For example, extracted teeth may vary due to different positions, age, different oral hygiene or diet, as well as genetic variances. Extracted human teeth are also only available in limited quantities. For *in situ* clinical tests, it is also often considered unpleasant by the test persons to wear extracted human tooth slabs in their mouth.

Animal teeth, in particular, bovine or porcine teeth, are sometimes used in experimental caries studies (e.g., Zhou et al., 2012, Kang et al., 2011), but they differ from human teeth in size, structure and mechanical properties. For example, a higher porosity and lower hardness lead to higher diffusion rates through enamel. Thus, animal teeth constitute a non-optimal model system.

As a model for practice of tooth treatment for dental students, in particular, for drilling, different artificial teeth which simulate a dentin and enamel texture were suggested. These artificial teeth comprise a sintered body of an inorganic powder such as alumina impregnated with a resin or low melting point glass (US 2009/0035738 A1, EP 2011450 A1), or a hydroxyapatite powder having 40-80% porosity impregnated with (meth)acrylic acid system (JP 05-216395). JP H05 241500 A discloses a similar artificial tooth.

However, due to the impregnation, these artificial teeth are not suitable as a caries model.

In light of this, the inventors addressed the problem of providing an artificial tooth which is suitable as a caries model, i.e., for experimental induction of caries as well as for studies wherein prevention or treatment of induction or progression of caries can be analysed. It is advantageous that this artificial tooth can be easily generated by cost-effective methods and can be standardized with regard to its mechanical, biological as well as chemical properties.

This problem is solved by the subject matter of the claims. In particular, the inventors provide an artificial tooth, comprising: and sintered
- artificial enamel comprising pressed and sintered calcium phosphate and having a Vickers hardness of 1 to 6 GPa, and
- artificial dentin comprising pressed calcium phosphate and having a Vickers hardness of 0.05 to 0.8 GPa,
wherein the artificial enamel and the artificial dentin are bonded, wherein the artificial enamel comprises pressed and sintered calcium phosphate, and wherein the artificial dentin comprises pressed calcium phosphate.

The artificial tooth of the invention preferably is of fully synthetic origin and thus avoids biohazards; it can be produced in mass production and provides a reliable and reproducible tool for studies of caries induction, prevention and therapy. The physical and mechanical characteristics are comparable to characteristics of human teeth, preferably, human permanent teeth (Craig and Peyton, 1958, Gutierrez-Salazar 2003). Alternatively, an artificial tooth suitable as a caries model for deciduous human teeth can be prepared, wherein physical characteristics are adapted accordingly. For example, compared to permanent artificial teeth, the thickness of the enamel for artificial deciduous teeth can be less, and the material, in particular the enamel, can be softer (Low et al., 2005).

Preferably, throughout the invention, the calcium phosphate is hydroxyapatite. However, other forms of calcium phosphate, e.g., alpha-tricalcium phosphate (α-TCP), beta-tricalcium phosphate (β-TCP), dicalciumphosphate dehydrate (DCPD) or octacalcium phosphate (OCP), or a mixture of different forms may also be used.

The artificial enamel comprises pressed and sintered calcium phosphate, in particular hydroxyapatite, and, preferably, the artificial dentin comprises pressed and non-sintered calcium phosphate, in particular hydroxyapatite. In a preferred embodiment, an artificial tooth of the invention comprises artificial enamel comprising pressed and sintered hydroxyapatite having a Vickers hardness of 1 to 6 GPa, preferably, 1.7 to 5 GPa, 2 to 4 GPa, 2.5 to 3.5 GPa or 2.8 to 3.2 GPa or about 3 GPa, and artificial dentin comprising pressed hydroxyapatite which, preferably, has not been sintered after pressing (i.e., non-sintered hydroxyapatite), or has been sintered at a temperature of up to about 900°C. The artificial dentin has a Vickers hardness of 0.05 to 0.8 GPa, preferably, 0.08-0.12 GPa, 0.09-0.11 GPa or about 0.1 GPa. Said artificial enamel and said artificial dentin are bonded.

Vickers hardness is measured according to established practice, e.g., according to ISO 6507:2005.

Throughout the invention, "about" is intended to describe a variance of +/- 10%, preferably, +/- 5% or +/- 1%. If not explicitly stated otherwise, the article "a" can mean "one or more". In the context of the invention, the term "pressed" means that a loose material, e.g., calcium phosphate powder, has been pressed to form a shaped body. The density of the pressed material is thus higher than the density of unpressed material.

Preferably, the artificial **enamel** of the invention has a density of 2-3.2 g/ml, more preferably, 2.5-3.1 g/ml or 2.85-3 g/ml or about 2.95 g/ml . For comparison, the density of hydroxyapatite is 3.12 g/ml. The relative density of the enamel compared to hydroxyapatite preferably is 87-99%, most preferably, about 93%.

The artificial enamel of the invention may have a porosity of 13% or less, e.g., 0-13%, 1-10%, 5-7%, or 5% or less. Porosity can be determined, e.g., by Mercury intrusion porosimetry (MIP).

The artificial enamel of the invention may have a pore volume of 0.03 cm³/g or less, preferably, 0.003 cm³/g or less or 0.001 cm³/g or less, as assessed by BET (Brunauer Emmet Teller) gas absorption-desorption porosimetry.

The artificial enamel of the invention may have a specific surface area of 0.05 m²/g or less, preferably, 0.04 m²/g or less, 0.01 m²/g or less or 0.001 m²/g or less, as assessed by BET.

The artificial enamel has a high crystallinity. Preferably, there is a nearly complete or complete match of sample peaks in X-ray defraction (XRD) with a hydroxyapatite reference diffractogram. Preferably, no major impurities are observed in XRD.

The artificial enamel of the invention is preferably obtainable by a method comprising steps:
a) pressing calcium phosphate, e.g., hydroxyapatite, with a pressure force of 2-50 kN, preferably 5-30 kN, 10-29 kN, 15-28 kN, 20-27 kN or about 25 kN, and then
b) sintering at 800-1500°C, preferably at 1150-1350°C, 1200-1300°C or 1220-1280°C, most preferably at about 1250 °C, for 30 min - 4 h, preferably for 40 min - 2 h or 50 min - 1.5 h, most preferably for about 1 h.
Preferably, the sintering step of this method is carried out with a heating ramp of 30 min/200°C to 3 h / 200°C, preferably about 1 h/200°C, and with cooling to 200°C in 1 - 6 h, preferably in about 1.5 h. Alternatively, step gradients are possible for both heating and cooling. It is also possible to repeat the sintering step after cooling, e.g., heating to 1250°C, cooling to 400°C, and reheating to 1250°C.

In a preferred embodiment of the invention, the enamel is obtainable by pressing calcium phosphate such as hydroxyapatite with a pressure force of 20-30kN, preferably about 25 kN, and then sintering at about 1250°C for about 1 h, e.g., with a heating ramp of about 1 h/200°C, and with cooling to 200°C in about 1.5 h.

Throughout the invention, the artificial **dentin** preferably has a density of 2 to 3 g/ml, preferably 2.5 to 2.9 g/ml, about 2.8 g/ml or about 2.79 g/ml. The relative density of the dentin compared to hydroxyapatite preferably is 82-94 %, most preferably, about 88%. The porosity of the artificial dentin of the invention as determined by MIP preferably is 18% or less, e.g., 5-18%, 6-15%, 6-12%, or 8-10%.

The artificial dentin of the invention may have a pore volume of 0.1 to 0.5 cm³/g, preferably 0.2-0.4 cm³/g, 0.25-0.3 cm³/g or about 0.24-0.25 cm³/g, as assessed by BET (low-temperature gas absorption-desorption).

The artificial dentin of the invention may have a specific surface area of 55-120 m²/g, preferably 60-100 m²/g, 65-70 m²/g or about 66 m²/g, as assessed by BET.

The artificial dentin has a low crystallinity, i.e., it is in an amorphous state. Preferably, the sample peaks in XRD are mainly in accordance with a hydroxyapatite reference diffractogram. Preferably, no major impurities are observed in XRD.

The artificial dentin of tooth of the invention is preferably obtainable by pressing calcium phosphate, e.g., hydroxyapatite, with a pressure force of 2-50 kN, preferably 5-30 kN, 10-29 kN, 15-28 kN, 20-27 kN or about 25 kN, wherein the pressed calcium phosphate is, preferably, not sintered, or only sintered at temperatures up to about 900°C.

The pressure force used for pressing preferably is 2 kN or more, preferably, 5 kN or more, or 10 kN or more. For example, 2-50 kN, 5-30 kN, 10-29 kN, 15-28 kN, 20-27 kN or, most preferably about 25 kN may be used for pressing, e.g., in a pellet press. For example, a tablet press with uniaxial pressure, dye i.d. 5-25 mm, e.g., 13 mm, may be used.

The height of the pressed body of enamel or dentin, which will usually be decisive for the thickness of the enamel and dentin layer, may be about 0.05 to about 5 cm, preferably, about 0.1 to about 2 cm, about 0.1 to about 1 cm, about 0.1 to about 0.5 cm or about 0.1 to about 0.2 cm. Of course, the height of the layers can also be modified later, before or after bonding, e.g., by cutting or polishing, or by bonding one or more additional layers. For example, the height of the enamel layer of the finished artificial tooth may be constant or it may vary similar to the height of an enamel layer on a natural tooth, i.e., it may be thinner at the edges.

For the experiments described below, an eccentric press, such as Korsch XP1 (Korsch AG, Berlin) was employed. Another suitable presses would be e.g., a LOT manual laboratory press 15t (LOT-ORIEL Gruppe Europa, Darmstadt). About 100 mg to 450 mg, preferably, 300-400 mg, 330-350 mg or about 340 mg of calcium phosphate can be pressed with such a press. Before filling the die, a lubricant such as magnesium stearate, e.g., 5 mg, may be used. Pressing is preferably performed at room temperature or at about 20°C to about 25°C.

Sintering is a method used to create objects from powders. It is based on atomic diffusion. Diffusion occurs in any material above absolute zero, but it occurs much faster at higher temperatures. In most sintering processes, the powdered material is held in a mold and then heated to a temperature below the melting point. The atoms in the powder particles diffuse across the boundaries of the particles, fusing the particles together and creating one solid piece (www.wikipedia.org). In the context of the invention, sintering is performed by a thermal treatment at about 800°C to about 1500°C. In the context of the invention, sintering is preferably used to treat pressed calcium phosphate, e.g., hydroxyapatite, to prepare the artificial enamel of the invention. Thus, no mold is required. For sintering in preparation of artificial enamel, temperatures of about 1150-1350°C for about 1 hour have proved advantageous. A high temperature furnace, e.g., RHF 1500, Carbolite, Ubstadt-Weiher, may be used.

The tooth of the invention comprises bonded artificial enamel and artificial dentin, or, preferably, consists thereof. The tooth preferably is biphasic. In the context of the invention, bonding preferably does not lead to generation of an additional layer which would render it more difficult to study subsurface caries formation with the tooth of the invention, such as a polymer layer between enamel and dentin layers.

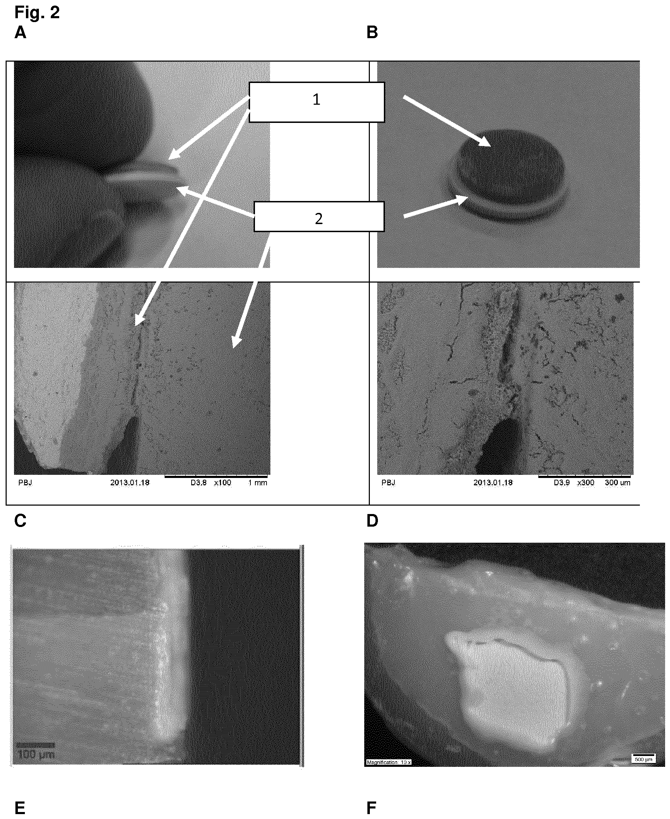

The bonding is preferably performed by contacting a surface of the enamel and/or dentin with a suitable acidic solution, and then contacting said surfaces of enamel and dentin with each other. The acid solution preferably is phosphoric acid, e.g., 20-50% H₃PO₄, preferably, 40-50% H₃PO₄. Alternatively, e.g., oxalic acid, 20-30%, preferably, about 25 %, may be used. A surface is contacted with the acid solution, and the surface which is to be bonded is contacted with said surface. The specimens are dried for 1 h at room temperature. Fig. 2C and D show the bonding formed between the enamel and dentin.

In the artificial tooth of the invention, the artificial enamel and/or the artificial dentin preferably essentially consist of pressed hydroxyapatite, wherein the artificial enamel and/or the artificial dentin preferably comprise at least 95% (w/w), more preferably, at least 97% (w/w) or at least 99% (w/w) or 100% hydroxyapatite. In particular, in one embodiment, the artificial enamel and/or the artificial dentin do not comprise any protein, e.g., collagen. In another embodiment, the artificial enamel and/or the artificial dentin not comprise any polymer. The artificial enamel and/or the artificial dentin may comprise neither protein nor polymer.

The present invention also relates to a method of preparing an artificial tooth of the invention as described herein, comprising steps wherein said artificial enamel and said artificial dentin are prepared and bonded to each other. Said method may comprise preparing artificial enamel by
a) pressing calcium phosphate, e.g., hydroxyapatite, with a pressure force of 2-50 kN, preferably 10-40 kN, 20-30 kN, or about 25 kN, and then
b) sintering at 800-1500°C, preferably, at 1150-1400°C or at 1200-1300°C most preferably at about 1250 °C, for 30 min - 4 h, preferably for 40 min - 2 h or 50 min - 1.5 h, most preferably for about 1 h.
Preferably, the sintering step of this method is carried out with a heating ramp of 30 min/200°C to 3 h / 200°C, preferably about 1 h/200°C, and with cooling to 200°C in 1 - 6 h, preferably in about 1.5 h;
and preparing artificial dentin by pressing calcium phosphate, e.g., hydroxyapatite, with a pressure force of 2-50 kN, preferably 10-40 kN, 20-30 kN, or about 25 kN, wherein the pressed calcium phosphate is not sintered,
and bonding said enamel and dentin, preferably by contacting a surface of the enamel and/or dentin with an acid solution, such as phosphoric acid, and then contacting said surfaces of the enamel and dentin with each other.

The resulting artificial tooth may be brought into a specific form, for example by cutting and/or polishing. In particular, a form similar to a tooth (e.g., a molar, an incisor or a canine) may be suitable, e.g., for use of the artificial tooth in practising dental treatments. Optionally, the artificial tooth may be set in a matrix such as polymer matrix, e.g., to simplify handling, or several artificial teeth may be set into a polymer matrix as a tooth model.

The calcium phosphate or hydroxyapatite which is used for pressing in step a, preferably is non-sintered hydroxyapatite, in particular, non-sintered hydroxyapatite is pressed and then sintered for preparing artificial enamel. However, sintered hydroxyapatite may also be used for pressing and then sintering in preparation of artificial enamel. The calcium phosphate used for preparing artificial dentin may be sintered or non-sintered hydroxyapatite. A powder having a particle size of about 0.5 to about 20 µm, preferably about 1.5 to about 15 µm may be used. Such powder may have a specific surface area of about 65-70 m²/g. It may have a pore volume of about 0.3 to about 0.75 cm³/g. It may have an average pore size of about 25 to about 35 nm, e.g., about 31.4 nm, all as determined by BET.

Suitable calcium phosphate for preparing the artificial dentin or enamel is commercially available, e.g., hydroxyapatite from Medicoat (Medicoat Medipure, MM, or Medicoat very fine powder, MMVF, Maegenwil, CH). Sintered hydroxyapatite from Sigma-Aldrich, Steinheim, DE, is also suitable.

The present invention also relates to a tooth model comprising the artificial tooth of the present invention embedded in a polymer. This can simplify handling or serve to link several artificial teeth, e.g., in a set of teeth or for dentures. For example, an acrylate polymer, e.g., methacrylate polymer, epoxy-resin, or phenol-resin matrix may be used.

The present invention provides use of the artificial tooth of the invention as an *in vitro* model tooth, in particular, to research.

The present invention relates to use of
- an artificial tooth comprising artificial enamel as described above, e.g., having a Vickers hardness of 1 to 6 GPa and comprising pressed sintered calcium phosphate such as pressed hydroxyapatite,
- an artificial tooth comprising artificial dentin as described above, e.g., having a Vickers hardness of 0.05 to 0.8 GPa and comprising pressed calcium phosphate such as pressed hydroxyapatite, or, preferably,
- the artificial tooth or tooth model of the invention comprising artificial enamel having a Vickers hardness of 1 to 6 GPa and artificial dentin having a Vickers hardness of 0.05 to 0.8 GPa, wherein the artificial enamel and the artificial dentin are bonded, and wherein the artificial enamel and the artificial dentin comprise pressed calcium phosphate, as described above, for generating or inducing a caries lesion in said tooth.

Caries lesions can be induced, e.g., according to known methods (e.g., Schmidt et al. 1982; Preston et al. 2007; Kumar et al. 2008; Trairatvorakul et al. 2009; Lo et al. 2010; Churchley; Liu et al. 2011; Yang et al. 2011; Berger 2012), for example by bringing the tooth into contact with a suitable acidic solution such as phosphate buffer pH 4.5-5.2, 35 wt% H₃PO₄, citric acid (20 wt%), lactic acid (50 wt%), 20 wt% / 10 wt% / 7.5 wt% H₃PO₄; or 2.2 mM CaCl₂, 2.2 mM NaH₂PO₄, 0.05 M acetic acid, pH 4.4 with 1 M KOH, for a suitable time, e.g., 30 min to 96 h, or even up to one month or up to one year. Cycling models may be used. A caries lesion may also be induced by bringing the tooth into contact with bacteria selected from the group comprising *Streptococcus mutans, Streptococcus sobrinus* and *Lactobacillus spp, Actnomyces viscous, Pichia* and *Coccii.* The artificial tooth of the invention may be employed in a bacterial caries model such as that used by Fontana et al., 2000.

As the artificial teeth of the invention are standardized, it is also possible to generate standardized caries lesions of different types. Different types of lesions are, e.g., an early caries lesion (white spot), a subsurface lesion or a cavitation. Lesions can also be classified as D1, D2, D3 or D4 lesions according to Marthaler, 1966 (Kühnisch et al., 2007, Fig. 1). The artificial tooth of the invention allows for generation of lesions in the enamel section, in the enamel and dentin section or also in the dentin section only (comparable to root caries).

The present invention further relates to use of
- an artificial tooth comprising artificial enamel as described above, e.g., having a Vickers hardness of 1 to 6 GPa and comprising pressed calcium phosphate such as sintered pressed hydroxyapatite,
- an artificial tooth comprising artificial dentin as described above, e.g., having a Vickers hardness of 0.05 to 0.8 GPa and comprising pressed calcium phosphate such as pressed hydroxyapatite, or, preferably,
- the artificial tooth or tooth model of the invention comprising artificial enamel having a Vickers hardness of 1 to 6 GPa and artificial dentin having a Vickers hardness of 0.05 to 0.8 GPa, wherein the artificial enamel and the artificial dentin are bonded, and wherein the artificial enamel and the artificial dentin comprise pressed calcium phosphate, as described above,
for prevention and/or treatment of a caries lesion, e.g., by remineralisation. The caries lesion is a caries lesion in said artificial tooth, i.e., the tooth is used as an *in vitro* model for caries.

The artificial tooth provides an advantageous screening system for tooth (re)mineralisation agents. In this system, artificial sub-surface lesions may be induced. Then, remineralising potential or e.g., characteristics of new therapies can be studies. Remineralisation treatment may employ self-aggregating peptides (SAG) such as P11-4, e.g as described in WO 2004/007532 A1. Curodont™ (credentis ag, Windisch, CH) may be used. The artificial tooth of the invention is particularly suitable for optimizing remineralisation, e.g., testing variant peptides or different conditions of remineralisation, because the invention provides a standardized testing model. Preferably, first, standardized caries lesions are generated in artificial teeth of the invention, and then the lesions are treated under different conditions and/or with different peptides.

The artificial tooth further provides an advantageous screening system for tooth protection agents. Different approaches of caries treatment and/or prevention can be tested and/or compared, e.g., different protective agents or therapies. For example, various methods of external fluoridation may be studied, or varnished artificial teeth may be tested for prevention of caries lesions.

The artificial tooth also provides a screening system for tooth in-situ models. For example, defined sizes of artificial tooth may be employed in clinical trials instead of human enamel slabs. Thus, the test persons do not need to wear extracted human tooth slabs.

In another embodiment of the invention the tooth or tooth model of the invention as described above provides an educational model, e.g., for drilling, filling or sealing a tooth. It may be used for practising treatment or prevention of a tooth disease such as a caries lesion, e.g., by drilling, by remineralisation, e.g., as described above, by varnishing or sealing and/or by filling a lesion. Filling may be carried out with amalgam or with suitable polymer or ceramic fillings. The artificial tooth will provide very similar handling and similar haptic characteristics as native tooth material. In the context of this embodiment, the artificial tooth of the invention is preferably shaped similar to a human tooth, e.g., an incisor, a canine or a molar. For example, the layer of artificial enamel on the artificial dentin may vary in thickness to simulate a natural tooth. The body of dentin, which is preferably thicker than the body of enamel bonded with it, in this embodiment, may be shaped to comprise a hole simulating the pulpa of a natural tooth. More than one artificial tooth may be situated next to each other in a tooth model joined by a polymer matrix, as described above, e.g., to enable practising treatment of interdental caries.

The subject matter of the invention is further exemplified in the examples below. Their scope is not intended to limit the invention. All references cited herein are herewith fully incorporated.

### Figures

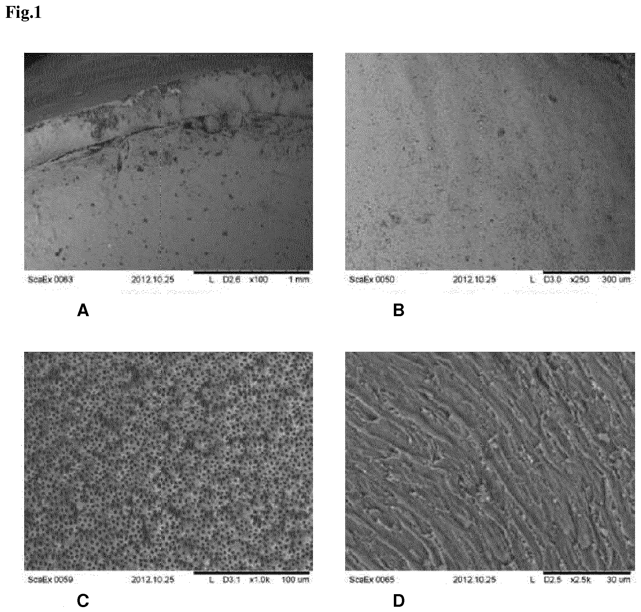

- **Fig. 1**: SEM pictures of a human molar tooth. **A** interface dentin/ enamel (100-X), **B** enamel buccal (250-X), **C** dentina coronal (1.0-kX) and **D** enamel buccal (2.5-kX). The structure has tubule-like shape which is result in a porous structure.
- **Fig. 2**: Artificial tooth of the invention. **A+B** Artificial tooth comprising enamel (1) and dentin (2) layer. **C** Scanning electron microscopy of junction of enamel (1) and dentin (2) layer (100X) **D** Scanning electron microscopy of junction of enamel (1) and dentin (2) layer (300X). **E** artificial subsurface lesion on human tooth. The image is made by light microscopy (Raman microscope) and shows a cut tooth on the left side, with an artificial lesion visible on the surface of the tooth (from top of picture nearly to the bottom). The bottom of the picture shows intact tooth surface. The opaque subsurface lesion generated by the method of Example 3 (35% phosphoric acid, 30 min) can be seen. **F** Artificial lesion in artificial enamel of an artificial tooth induced by the method of Example 3 (35% phosphoric acid, 30 min). Magnification 10x.

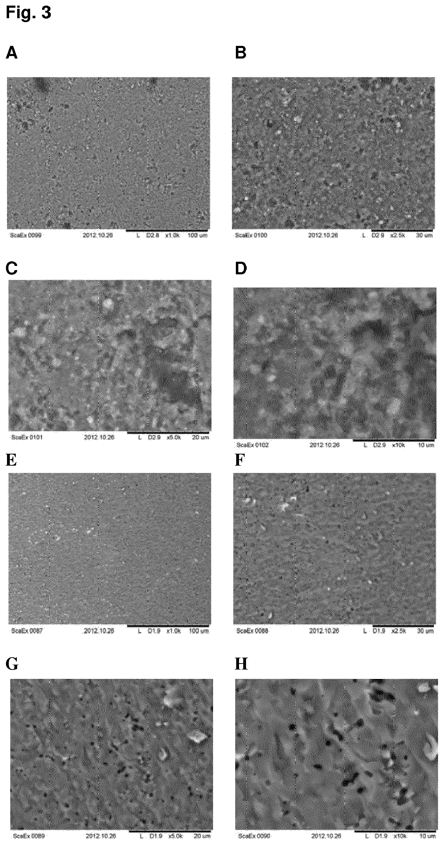

- **Fig. 3**: SEM pictures of artificial dentin (PB2.7B (PB raw) **A**1.0-kX, **B** 2.5-kX, **C** 5.0-kX, **D** 10.0-kX, and enamel (PB2.9A (PB HA MMVF 1250°C)) **E**1.0-kX, **F** 2.5-kX, **G** 5.0-kX, **H** 10.0-kX.
- **Fig. 4**: XRD analysis of **A** sintered hydroxyapatite reference, **B** dentin cross section (from deproteinised human tooth), **C** enamel, occlusal (from deproteinised human tooth), **D** artificial dentin PB 2.7B (PB raw) **E** artificial enamel PB2.800X. All y-axis: Relative intensity / [%], all x-axis: 2θ / [°]

### Examples

### Example 1: Generation and Characterization of Hydroxylapatite Specimen

### Objective

An artificial tooth model relies on the development of a suitable technology to process raw ceramic material into a form with similar mechanical and chemical properties compared to human teeth. The inventors prepared and analysed compressed and partly thermally treated hydroxyapatite specimens. The analysis was performed by means of mercury intrusion porosimetry, BET gas adsorption, x-ray diffraction, Vickers hardness and scanning electron microscopy.

### Materials and method

For generating different calcium phosphate specimens, 340 mg hydroxyapatite was pressed with an eccentric press (Korsch XP1). Different particle sizes and different suppliers, and either sintered or non-sintered hydroxyapatite (HA) were compared, e.g., from Sigma Aldrich or Medicoat (e.g., medipure very fine powder (MMVF) or Medicoat medipure (MM)). Before filling the die (diameter = 13 mm), 5 mg Magnesium stearate was used. Different compression forces of the press were tested. Pressing was performed at room temperature. A sintering process was added for some specimens (RHF 1500, Carbolite), using a heating ramp: 200 °C/ 1 h, cooling ramp: in 1.5 h to 200 °C, sintering at different temperatures typically for 1 hour. Table 1 shows data for differently prepared hydroxyapatite specimens and one tooth sample (see Table 1). The tooth sample was axially cut into two pieces, a crown part and a root part.

**Table 1**

| No. | Sample | Preparation |
|---|---|---|
| 1 | PB 3.100X | HA Sigma-Aldrich, 25 kN, 1 h, 1300°C |
| 2 | PB 2.000X | HA Sigma-Aldrich, 25 kN, 1 h, 1050°C |
| 3 | PB 1.400X | HA Sigma-Aldrich, 25 kN, 1 h, 900°C |
| 4 | PB 1.700X | HA Sigma-Aldrich, 25 kN, 1 h, 1000°C |
| 5 | PB 2.300X | HA Sigma-Aldrich, 25 kN, 1 h, 1100°C |
| 6 | PB 2.800X | HA Sigma-Aldrich, 25 kN, 1 h, 1200°C |
| 7 | PB 2.7B (PB raw) | HA Sigma-Aldrich, 25 kN, no sintering |
| 8 | PB 1.8A | HA MM 45, 23 kN, no sintering |
| 9 | PB HA SDC 1.0g 800°C | HA MM 45, 30 kN, 1h, 800°C |
| 10 | PB HA SDC 1.0g 1250°C | HA MM 45, 30 kN, 1h, 1250°C |
| 11 | PB 2.1B | HA Sigma-Aldrich, 30 kN, 1 h, 900°C |
| 12 | PB 2.9A (HA MMVF 1250°C) | HA MMVF, 25 kN, 1h, 1250°C |
| 13 | PB 1.8C (HA MMVF raw) | HA MMVF, 23 kN, no sintering |
| 14 | PB 1.8D (HA SA 1.0g) | HA Sigma-Aldrich, 26 kN, no sintering |
| 15 | Human molar crown | Deproteinization |
| 16 | Human molar root | Deproteinization |

### Specimen characterization

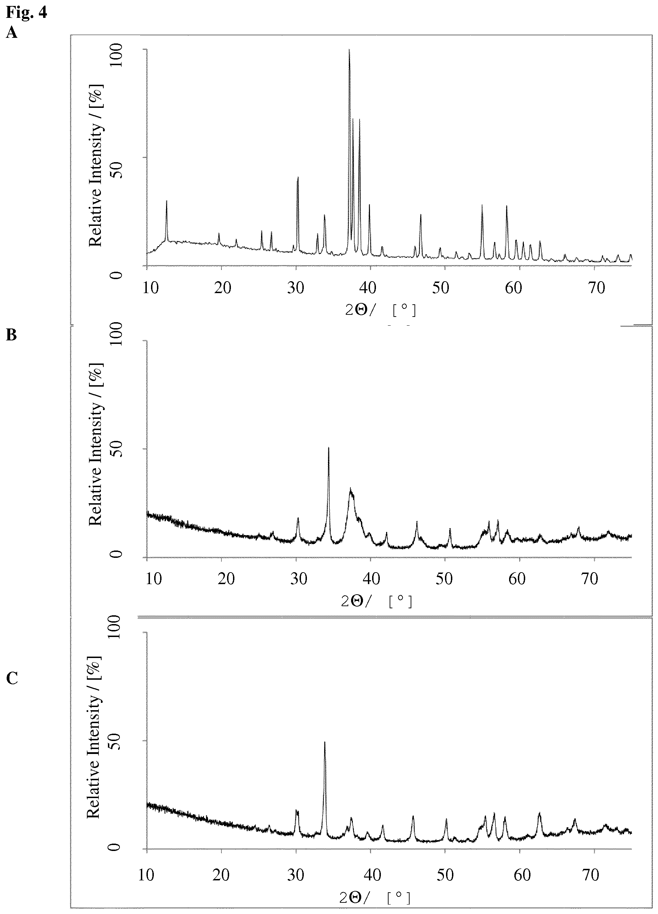

BET gas adsorption: Calculation of specific surface area, pore volume, and pore size was performed by nitrogen adsorption according to the Brunauer, Emmett, and Teller (BET) and Barett, Joyner, and Halenda model (BJH) on a Gemini 2380 instrument (Micromeritics, Germany) with Gemini software (version 2.00). Mercury intrusion porosimetry (MIP): Calculation of specific surface area, pore volume, pore size, and porosity was performed by mercury intrusion according to the Washburn equation model on a Pore-Master 60 (Quantachrome, Germany) with Quantachrome Data Report software (version 5.20). Scanning electron microscopy (SEM) was performed on a TM-1000 (Hitachi, Japan). X-ray diffraction (XRD) spectra were collected on a Phaser D2 (Bruker, Germany) with a CoKα1 monochromator (wavelength = 1.78897 nm) and compared with reference diffractograms of hydroxyapatite (Fig. **4A**), calcium carbonate (data not shown), calcium oxide (data not shown), and tricalcium phohphate (data not shown). Measurement of the surface hardness was performed by Vicker's indentation on a ZHV 10 (Zwick Roell, Germany, software: testXpert V12.3 Master) with a load of 10 N.

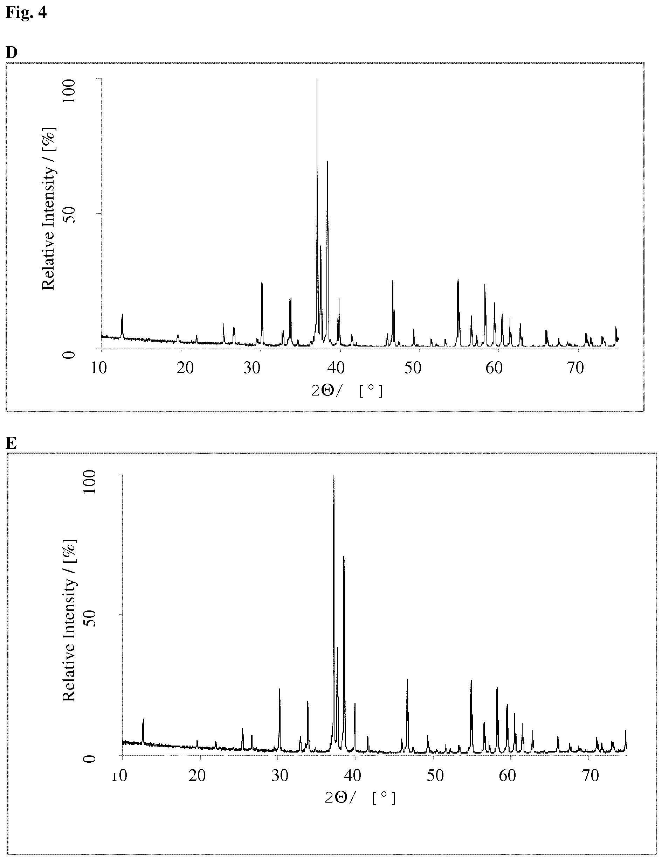

Results of the analysis are provided in **Table 2** below, and selected data is shown in Fig. **4****.**

Sample PB2.7B (PB raw) was selected as dentin for the following experiments, and sample PB 2.9A (HA MMVF 1250°C) was selected as artificial enamel for the following experiments.

**Table 2:**

| | Surface area (BET) [m²/g] | Pore volume (BET) [cm³/g] | Pore size (BET) [nm] | Surface area (MIP) [m²/g] | Pore volume (MIP) [cm³/g] | Pore size (MIP) [nm] | Porosity (MIP) [%] | Vickers hardness [GPa] | XRD |
|---|---|---|---|---|---|---|---|---|---|
| PB 3.100X | <0.001 | <0.001 | n/a | 0.026 | <0.001 | 22 | <0.1 | 3.3 | High crystallinity, complete match of sample peaks with hydroxyapatite reference diffractogram, no major impurities observed |
| PB 2.000X | | | | 2.849 | 0.1137 | 16 | 3.6 | 0.7846 | High crystallinity, complete match of sample peaks with hydroxyapatite reference diffractogram, no major impurities observed |
| PB 1.400X | 7.092 | 0.0183 | 10 | 6.359 | 0.2296 | 144 | 3.9 | 0.2403 | High crystallinity, complete match of sample peaks with hydroxyapatite reference diffractogram, no major impurities observed |
| PB 1.700X | | | | 4.187 | 0.158 | 151 | 4.6 | | Not acquired |
| PB 2.300X | 0.033 | 0.0023 | n/a | 2.157 | 0.1115 | 207 | 3.6 | 0.6963 | High crystallinity, complete match of sample peaks with hydroxyapatite reference diffractogram, no major impurities observed |
| PB 2.800X | | | | 0.192 | >0.001 | 17 | <0.1 | 2.3 | High crystallinity, complete match of sample peaks with hydroxyapatite reference diffractogram, no major impurities observed |
| **PB 2.7B (PB raw)** | **66.457** | **0.2406** | **14** | **60.984** | **0.2749** | **18** | **6.6** | **0.0981** | **Low crystallinity (amorphous), sample peaks mainly in accordance with HA dif-fractogram** |
| PB 1.8A | 42.200 | 0.1510 | 14 | 52.353 | 0.3679 | 28 | 12.3 | 0.0294 | Low crystallinity (amorphous state), sample peaks mainly in accordance with hydroxyapatite diffractogram |
| PB HA SDC 1.0g 800°C | | | | 8.981 | 0.1762 | 78 | 7.8 | 0.0932 | High crystallinity, complete match of sample peaks with hydroxyapatite reference diffractogram, no major impurities observed |
| PB HA SDC 1.0g 1250°C | n/a | <0.001 | n/a | 0.109 | 0.0033 | 119 | 0.2 | | High crystallinity, complete match of sample peaks with hydroxyapatite reference diffractogram, no major impurities observed |
| PB 2.1B | 7.043 | 0.0176 | 10 | 16.064 | 0.3512 | 87 | 9.8 | | Not acquired |
| **PB 2.9A (HA MMVF 1250°C)** | **<0.001** | **<0.001** | **n/a** | **<0.001** | **<0.001** | **n/a** | **n/a** | **3.001** | High crystallinity, complete match of sample peaks with hydroxyapatite reference diffractogram, no major impurities observed |
| PB 1.8C (HA MMVF raw) | 62.389 | 0.2330 | 15 | | | | | 0.0392 | Low crystallinity (amorphous state), sample peaks mainly in accordance with hydroxyapatite diffractogram |
| PB 1.8D (HA SA 1.0g) | 74.483 | 0.2776 | 15 | | | | | 0.05 | Low crystallinity (amorphous state), sample peaks mainly in accordance with hydroxyapatite diffractogram |
| Human molar crown enamel | <0.001 | <0.001 | n/a | 16.634 | 0.0574 | 14 | 1.7 | 1.7 | High grade of crystallinity |
| Human molar crown dentin | 92.565 | 0.2604 | 11 | | | | | n/a | Low grade of crystallinity, amorphous |
| Human molar root (dentin) | 109.254 | 0.3281 | 12 | 79.144 | 0.3299 | 17 | 11.0 | n/a | Low grade of crystallinity, amorphous |

### Example 2: Production of an artificial tooth

### Production of enamel and dentin phantom bodies

For generating artificial dentin, 340 mg hydroxyapatite (e.g., from Sigma Aldrich) was pressed with an eccentric press (Korsch XP1). Before filling the die (diameter = 13 mm), a lubricant, e.g., 5 mg magnesium stearate, was used. The compression force of press was 25 kN and the procedure was performed at room temperature.

For generating artificial enamel, 340 mg hydroxyapatite (e.g., Medicoat medipure very fine powder) was pressed with an eccentric press (Korsch XP1). Before filling the die (diameter = 13 mm), a lubricant, e.g., 5 mg magnesium stearate was used. The compression force of press was 25 kN and the procedure was performed at room temperature.

A sintering process was added to achieve the properties of enamel. The specimens were sintered (RHF 1500, Carbolite) at 1250 °C for 1 h (heating ramp: 200 °C/ 1 h, cooling ramp: in 1.5 h to 200 °C).

### Bonding

One flat side of a dentin body was brought into contact with 20 µl phosphoric acid 50 %. It was immediately brought into contact with a flat side of an enamel body at RT. The formed bonded artificial tooth was left to dry for 1 h at RT. The artificial tooth comprising both enamel and dentin is shown in Fig. 2. Fig. 2C and D show the site of bonding.

### Example 3: Generation of an artificial caries lesion

Extracted human teeth and artificial teeth prepared by the method of Example 2 were painted with nail varnish for protection, leaving the site for introduction of an artificial lesion free of nail varnish. The teeth were placed in an acidic demineralising solution (e.g., 5 ml) for a suitable time, e.g., 30 min to 96 h. Different demineralising solutions were tested (35 wt% H₃PO₄ for 30 min, or citric acid (20 wt%), lactic acid (50 wt%), 20 wt% / 10 wt% / 7.5 wt% H₃PO₄ for 24 h incubation; or 2.2 mM CaCl₂, 2.2 mM NaH₂PO₄, 0.05 M acetic acid, pH 4.4 with 1 M KOH (Lo et al., 2010) for 96 h incubation). All the tested conditions led to visible artificial lesions.

Fig. 2E shows a subsurface lesion on an extracted human tooth generated with 35 wt% H₃PO₄ for 30 min. Fig. 2F shows a lesion on an artificial tooth generated with 35 wt% H₃PO₄ for 30 min.

### Example 4: Treatment of an artificial caries lesion

An artificial lesion was generated in an artificial tooth of the invention according to the method of Example 3.

The tooth is washed three times in aqua dest. The lesion is treated with the peptide P11-4 as described by Agelli et al., 2003 (available, e.g., as Curodont™ (Credentis AG, Windisch) according to the manufacturer's instructions. In brief, the matrix is dissolved into 50 µl water. The solution is applied on the surface of the lesion. After a wait of 5 min, excess water will be removed. During this time, the matrix self assembles and presents a scaffold for tooth regeneration.

Three artificial teeth each are treated for a different number of treatment cycles. Success of remineralisation treatment is assessed optically and confirmed by visual inspection and/or µ-CT. The experiment allows for comparison between different treatment regimen and determination of the optimal number of treatment cycles. Comparable experiments can be carried out for optimisation of other parameters.

### Cited Literature

Agelli et al., 2003. J. Am Chem. Soc. 125, 9619-9628
Berger 2012. Braz Dent J23(2): 110-115
Craig et al. 1958. J. D. Res. 37(4): 671-668.
Churchley et al. 2011. J Biomed Opt16(2): 026001.
Fontana et al. 2000. Clin. Diagn. Lab. Immunol. 7: 49-54
Gutierrez-Salazar 2003. Materials Research 6 (3): 367-373.
Kang et al., 2011. Proc Soc Photo Opt Instrum Eng 2774 (78840Q)
Kühnisch et al., 2007. Kariesdetektion und -diagnostik bei Kindern und Jugendlichen, Oralprophylaxe und Kinderzahnheilkunde 29: 166-171
Kumar et al. 2008. Aust Dent J53(1): 34-40
Liu, Li et al. 2011. Dent Mater, May;27(5):465-77.
Lo, Zhi et al. 2010. J Dent38(4): 352-359.
Low et al. 2005. Ceram. Eng. Sci. Proc., 26: 145-152
Preston et al. 2007. J Dent35(6): 490-495.
Schmidt et al. 1982. Dtsch Zahnarztl Z37(12): 1015-1020.
Trairatvorakul et al. 2009. J Clin Pediatr Dent34(2): 131-134.
Yang et al. 2011. Acta Biomater. 7(5):2303-9.
Zhou et al., 2012. J. Dent. 40:255-263
US 2009/0035738 A1
EP 2011450 A1
JP 05-216395
WO 2004/007532 A1

## Claims

1. An artificial tooth, comprising artificial enamel having a Vickers hardness of 1 to 6 GPa and artificial dentin having a Vickers hardness of 0.05 to 0.8 GPa, wherein the artificial enamel and the artificial dentin are bonded, wherein the artificial enamel comprises pressed and sintered calcium phosphate, and wherein the artificial dentin comprises pressed calcium phosphate.

2. The artificial tooth of claim 1, wherein the artificial dentin comprises non-sintered calcium phosphate.

3. The artificial tooth of any of the preceding claims, wherein the calcium phosphate is hydroxyapatite.

4. The artificial tooth of any of the preceding claims, wherein the artificial enamel has a density of 2.5-3.2 g/ml, preferably, of about 2.95 g/ml,
wherein the artificial enamel preferably has a specific surface area of 0.001 m²/g or less as determined by BET and/or a pore volume of 0.03 cm³/g or less as determined by BET.

5. The artificial tooth of any of the preceding claims, wherein the artificial enamel is obtainable by a method comprising steps:
a) pressing hydroxyapatite with a pressure force of 2-50 kN, preferably about 25 kN, and then
b) sintering at 800-1500°C, preferably at about 1250 °C,
for 30 min - 4 h, preferably for about 1 h,
with a heating ramp of 30 min/200°C to 3 h / 200°C, preferably 1
h/200°C, and cooling to 200°C in 1 to 6 h, preferably in 1.5 h.

6. The artificial tooth of any of the preceding claims, wherein the artificial dentin has a density of 2 to 3 g/ml, preferably about 2.79 g/ml,
wherein the artificial dentin preferably has a specific surface area of 55-120 m²/g as determined by BET, and/or a pore volume of 0.1-0.5 cm³/g as determined by BET.

7. The artificial tooth of any of the preceding claims, wherein the artificial dentin is obtainable by pressing hydroxyapatite with a pressure force of 2-50 kN, preferably about 25 kN, wherein the pressed hydroxyapatite is preferably not sintered.

8. The artificial tooth of any of the preceding claims, wherein the bonding is performed after treatment of the surface of the enamel and/or dentin with an acid, preferably, phosphoric acid.

9. The artificial tooth of any of the preceding claims, wherein the artificial enamel and/or the artificial dentin essentially consist of pressed calcium phosphate, preferably hydroxyapatite, wherein the artificial enamel and/or the artificial dentin preferably comprise at least 95% (w/w), more preferably, at least 97% (w/w) or at least 99% (w/w) or 100% hydroxyapatite.

10. The artificial tooth of any of the preceding claims, which does not comprise any protein and/or which does not comprise any polymer.

11. A tooth model comprising the artificial tooth of any of the preceding claims embedded in a polymer.

12. Use of the artificial tooth or tooth model of any of claims 1-11 for practising treatment or prevention of a tooth disease, such as a caries lesion, by one or more method(s) selected from the group comprising drilling, remineralisation, varnishing and filling.

13. In vitro method of generating a caries lesion and/or preventing and/or treating a caries lesion, comprising bringing the artificial tooth or tooth model of any of claims 1-11 into contact with an agent selected from the group comprising:
- a suitable acidic solution and
- bacteria selected form the group comprising *Streptococcus mutans, Streptococcus sobrinus* and *Lactobacillus spp, Actnomyces viscous, Pichia* and *Coccii.*

14. Method or use of any of claims 12 or 13, wherein the caries lesion is selected from the group comprising a white spot, a cavitation, and a subsurface lesion.

15. Method of preparing the artificial tooth of any of claims 1-10 or the tooth model of claim 11, comprising:
a) pressing and then sintering calcium phosphate to form artificial enamel, and
b) pressing calcium phosphate to form artificial dentin, and
c) bonding artificial enamel and artificial dentin.

## Patentansprüche

1. Ein künstlicher Zahn, umfassend künstlichen Zahnschmelz mit einer Vickers-Härte von 1 bis 6 GPa und künstliches Dentin mit einer Vickers-Härte von 0.05 bis 0.8 GPa, wobei der künstliche Zahnschmelz und das künstliche Dentin miteinander verbunden sind, wobei der künstliche Zahnschmelz gepresstes und gesintertes Calciumphosphat umfasst und wobei das künstliche Dentin gepresstes Calciumphosphat umfasst.

2. Der künstliche Zahn nach Anspruch 1, wobei das künstliche Dentin nicht gesintertes Calciumphosphat umfasst.

3. Der künstliche Zahn nach einem der vorhergehenden Ansprüche, wobei das Calciumphosphat Hydroxyapatit ist.

4. Der künstliche Zahn nach einem der vorhergehenden Ansprüche, wobei der künstliche Zahnschmelz eine Dichte von 2.5-3.2 g/ml aufweist, bevorzugt, von etwa 2.95 g/ml,
wobei der künstliche Zahnschmelz bevorzugt eine spezifische Oberfläche von 0.001 m²/g oder weniger, bestimmt durch BET, und/oder ein Porenvolumen von 0.03 cm³/g oder weniger, bestimmt durch BET, aufweist.

5. Der künstliche Zahn nach einem der vorhergehenden Ansprüche, wobei der künstliche Zahnschmelz erhältlich ist durch ein Verfahren, welches Schritte umfasst:
a) Pressen von Hydroxyapatit mit einem Druck von 2-50 kN, bevorzugt etwa 25 kN, und dann
b) Sintern bei 800-1500°C, bevorzugt bei etwa 1250 °C,
für 30 min - 4 h, bevorzugt für etwa 1 h,
mit einer Heizgeschwindigkeit von 30 min/200°C bis 3 h / 200°C, bevorzugt 1
h/200°C, und Abkühlen auf 200°C in 1 bis 6 h, bevorzugt in 1.5 h.

6. Der künstliche Zahn nach einem der vorhergehenden Ansprüche, wobei das künstliche Dentin eine Dichte von 2 bis 3 g/ml aufweist, bevorzugt etwa 2.79 g/ml,
wobei das künstliche Dentin bevorzugt eine eine spezifische Oberfläche von 55-120 m²/g, bestimmt durch BET, und/oder ein Porenvolumen von 0.1-0.5 cm³/g, bestimmt durch BET, aufweist.

7. Der künstliche Zahn nach einem der vorhergehenden Ansprüche, wobei das künstliche Dentin erhältlich ist durch ein Pressen von Hydroxyapatit mit einem Druck von 2-50 kN, bevorzugt etwa 25 kN, wobei das gepresste Hydroxyapatit bevorzugt nicht gesintert ist.

8. Der künstliche Zahn nach einem der vorhergehenden Ansprüche, wobei die Verbindung nach Behandlung der Oberfläche des Zahnschmelzes und/oder des Dentins mit einer Säure, bevorzugt mit Phosphorsäure, bewirkt wird.

9. Der künstliche Zahn nach einem der vorhergehenden Ansprüche, wobei der künstliche Zahnschmelz und/oder das künstliche Dentin im Wesentlichen aus gepresstem Calciumphosphat bestehen, bevorzugt Hydroxyapatit,
wobei der künstliche Zahnschmelz und/oder das künstliche Dentin bevorzugt mindestens 95% (w/w), mehr bevorzugt mindestens 97% (w/w) oder mindestens 99% (w/w) oder 100% Hydroxyapatit aufweisen.

10. Der künstliche Zahn nach einem der vorhergehenden Ansprüche, welcher kein Protein und/oder kein Polymer umfasst.

11. Ein Zahnmodell umfassend den Zahn nach einem der vorhergehenden Ansprüche, eingebettet in ein Polymer.

12. Verwendung des künstlichen Zahns oder Zahnmodells nach einem der Ansprüche 1-11 zur Übung einer Behandlung oder Vorbeugung einer Zahnerkrankung, wie einer Karies-läsion, mit einem oder mehreren Verfahren, ausgewählt aus der Gruppe umfassend Bohren, Remineralisierung, Lackierung und Füllen.

13. In vitro Verfahren zur Herstellung einer Karies-Läsion und/oder Vorbeugung und/oder Behandlung einer Karies-Läsion, Schritte umfassend, bei denen man den künstlichen Zahn oder das Zahnmodell nach einem der Ansprüche 1-11 in Kontakt mit einem Agens bringt, ausgewählt aus der Gruppe umfassend:
- Eine geeignete saure Lösung und
- Bakterien ausgewählt aus der Gruppe umfassend *Streptococcus mutans, Streptococcus sobrinus* und *Lactobacillus spp, Actnomyces viscous, Pichia* und *Coccii.*

14. Verfahren oder Verwendung nach einem der Ansprüche 12 oder 13, wobei die Karies-Läsion ausgewählt ist aus der Gruppe umfassend einen White Spot, ein Loch und eine Subsurface-Läsion.

15. Verfahren zur Herstellung des künstlichen Zahns nach einem der Ansprüche 1-10 oder des Zahnmodells nach Anspruch 11, umfassend:
a) Pressen und dann Sintern von Calciumphosphate, um künstlichen Zahnschmelz zu bilden, und
b) Pressen von Calciumphosphate, um künstliches Dentin zu bilden, und
c) Verbindung von künstlichem Zahnschmelz und künstlichem Dentin.

## Revendications

1. Dent artificielle, comprenant de l'émail artificiel ayant une dureté Vickers de 1 à 6 GPa et de la dentine artificielle ayant une dureté Vickers de 0,05 à 0,8 GPa, où l'émail artificiel et la dentine artificielle sont liés, où l'émail artificiel comprend du phosphate de calcium pressé et fritté, et où la dentine artificielle comprend du phosphate de calcium pressé.

2. Dent artificielle selon la revendication 1, dans laquelle la dentine artificielle comprend du phosphate de calcium non fritté.

3. Dent artificielle selon l'une quelconque des précédentes revendications, dans laquelle le phosphate de calcium est de l'hydroxyapatite.

4. Dent artificielle selon l'une quelconque des précédentes revendications, dans laquelle l'émail artificiel a une densité de 2,5-3,2 g/ml, de préférence, de l'ordre de 2,95 g/ml,
où l'émail artificiel a de préférence une surface spécifique de 0,001 m²/g ou moins comme déterminé par la méthode BET et/ou un volume de pore de 0,03 cm³/g ou moins comme déterminé par la méthode BET.

5. Dent artificielle selon l'une quelconque des précédentes revendications, dans laquelle l'émail artificiel peut être obtenu par un procédé comprenant les étapes consistant à :
a) presser de l'hydroxyapatite avec une force de pression de 2-50 kN, de préférence de l'ordre de 25 kN, puis
b) fritter à 800-1500°C, de préférence à environ 1250°C,
pendant 30 min - 4 h, de préférence pendant 1 h environ,
avec une rampe de chauffage de 30 min/200°C à 3 h/200°C, de préférence 1 h/200°C, et refroidir à 200°C en 1 à 6 h, de préférence en 1,5h.

6. Dent artificielle selon l'une quelconque des précédentes revendications, dans laquelle la dentine artificielle a une densité de 2 à 3 g/ml, de préférence de l'ordre de 2,79 g/ml,
où la dentine artificielle a de préférence une surface spécifique de 55-120 m²/g comme déterminé par la méthode BET, et/ou un volume de pore de 0,1-0,5 cm³/g comme déterminé par la méthode BET.

7. Dent artificielle selon l'une quelconque des précédentes revendications, dans laquelle la dentine artificielle peut être obtenu en pressant de l'hydroxyapatite avec une force de pression de 2-50 kN, de préférence d'environ 25 kN, où l'hydroxyapatite pressée est de préférence non frittée.

8. Dent artificielle selon l'une quelconque des précédentes revendications, dans laquelle la liaison est effectuée après un traitement de surface de l'émail et/ou de la dentine avec un acide, de préférence, un acide phosphorique.

9. Dent artificielle selon l'une quelconque des précédentes revendications, dans laquelle l'émail artificiel et/ou la dentine artificielle sont composés essentiellement de phosphate de calcium pressé, de préférence d'hydroxyapatite, où l'émail artificiel et/ou la dentine artificielle comprennent de préférence au moins 95% (poids/poids), mieux, au moins 97% (poids/poids) ou au moins 99% (poids/poids) ou 100% d'hydroxyapatite.

10. Dent artificielle selon l'une quelconque des précédentes revendications, qui ne comprend pas de protéine et/ou qui ne comprend pas de polymère.

11. Modèle de dent comprenant la dent artificielle selon l'une quelconque des précédentes revendications enrobée dans un polymère.

12. Utilisation de la dent artificielle ou du modèle de dent selon l'une quelconque des revendications 1 à 11, pour procéder au traitement ou à la prévention d'une maladie dentaire, comme une lésion carieuse, par un ou plusieurs procédés choisis parmi le groupe comprenant le fraisage, la reminéralisation, l'application de vernis et l'obturation.

13. Méthode in vitro de création d'une lésion carieuse et/ou de prévention et/ou de traitement d'une lésion carieuse, comprenant la mise en contact de la dent artificielle ou du modèle de dent selon l'une quelconque des revendications 1 à 11 avec un agent choisi parmi le groupe comprenant :
une solution acide appropriée et
une bactérie choisie parmi le groupe comprenant *Streptococcus mutans, Streptococcus sobrinus* et *Lactobacillus spp, Actnomyces viscous, Pichia* et *Coccii.*

14. Méthode ou utilisation selon l'une quelconque des revendications 12 ou 13, où la lésion carieuse est choisie parmi le groupe comprenant une lésion blanche, une cavitation, et une lésion de sub-surface.

15. Procédé de préparation de la dent artificielle selon l'une quelconque des revendications 1 à 10 ou du modèle de dent selon la revendication 11, comprenant les étapes consistant à :
a) presser, puis fritter du phosphate de calcium pour former de l'émail artificiel, et
b) presser du phosphate de calcium pour former de la dentine artificielle, et
c) lier l'émail artificiel et la dentine artificielle.
